# EUROPÄISCHE PATENTSCHRIFT

(11) **EP 0 970 554 B1**
(45) Veröffentlichungstag und Bekanntmachung des Hinweises auf die Patenterteilung: **22.10.2003**
(21) Anmeldenummer: 97920548.1
(22) Anmeldetag: 26.03.1997
(51) Int. Cl.: H02H 7/30

(54) **VERFAHREN UND ANORDUNG ZUR SELEKTIVEN NETZÜBERWACHUNG BEI SCHALTANLAGEN**
PROCESS AND ARRANGEMENT FOR SELECTIVE NETWORK MONITORING FOR SWITCHGEAR
PROCEDE ET DISPOSITIF DE SURVEILLANCE SELECTIVE DE RESEAU DANS DES INSTALLATIONS DE COMMUTATION

(43) Veröffentlichungstag der Anmeldung: 12.01.2000
(73) Patentinhaber: SIEMENS AKTIENGESELLSCHAFT, 80333 München (DE)
(72) Erfinder: HARTMANN, Werner, D-91091 Grossenseebach (DE); HAAS, Wilfried, D-91058 Erlangen (DE); KIESER, Jörg, D-91301 Forchheim (DE); KURZMANN, Harald, D-14089 Berlin (DE)
(86) Internationale Anmeldenummer: DE9700621
(87) Internationale Veröffentlichungsnummer: WO98043333

(56) Entgegenhaltungen:
- EP-A- 0 096 601
- EP-A- 0 116 509

## Beschreibung

Die Erfindung bezieht sich auf ein Verfahren zur selektiven Netzüberwachung bei Schaltanlagen. Daneben bezieht sich die Erfindung auch auf die zugehörige Anordnung mit Mitteln zur Durchführung des Verfahrens.

In Energieverteilungsanlagen ist einer der wichtigsten in der Praxis auftretenden Störfälle ein Kurzschluß in Unterverteilungsnetzen, der zu Kurzschlußströmen führt, die im allgemeinen mehr als eine Größenordnung über den Nennströmen im Netz liegen. Solche Kurzschlüsse können nicht nur zu lokalen Schäden durch den beim Kurzschluß im allgemeinen entstehenden Lichtbogen führen, sondern beeinträchtigen auch die Sicherheit und Funktion des übergeordneten Netzes. Deshalb werden in Unterverteilungsnetzen Leistungsschalter eingesetzt, um bei Störfällen im Netz den betroffenen Teil des Netzes, d.h. die Unterverteilung mit diesbezüglichen Verbrauchern, vom übrigen Bereich zu trennen und so eine unbeeinträchtigte Funktion des Gesamtsystems zu gewährleisten. Diese Leistungsschalter haben die Aufgabe, den Kurzschlußstrom nach nur wenigen Stromhalbwellen zu unterbrechen, um auftretende Schäden und Beeinträchtigungen des Netzes zu minimieren. Sie bestehen im allgemeinen aus einem feststehenden und einem relativ dazu bewegbaren Kontakt, welche durch mechanisches Trennen der Kontaktstücke einen vorher geschlossenen Stromkreis öffnen.

In Ausnahmefällen kann es dann zu einem Versagen des Leistungsschalters kommen, wenn beispielsweise das Ende der Lebensdauer der Schaltkontakte erreicht ist. In diesem Fall muß ein übergeordneter Leistungsschalter einen entsprechend größeren Teil des untergeordneten Netzes vom übrigen Netz trennen. Problematisch ist dabei, das Versagen des untergeordneten Leistungsschalters mit hoher Sicherheit und sehr frühzeitig zu erkennen, um mit ausreichend kurzer Zeitverzögerung den übergeordneten Leistungsschalter auszulösen. Speziell bei Vakuumschaltern ist beim Auftreten von sogenannten Spätversagern, d.h. Ereignissen, bei denen der Leistungsschalter zunächst erfolgreich trennt, dann aber durch Neuzündung eines Lichtbogens versagt, eine Diagnose des Schaltverhaltens sehr wichtig, um mit Sicherheit zur Auslösung des übergeordneten Leistungsschalters zu führen.

In der Praxis werden bisher Verfahren eingesetzt, die einen Kurzschluß aufgrund der Stromamplitude im Netz erkennen und gegebenenfalls ein entsprechendes Signal zur Auslösung des übergeordneten Leistungsschalters generieren. Dabei muß im allgemeinen über mehrere Stromhalbwellendauern gemessen werden, um einen ausreichend hohen Störabstand insbesondere gegen Fehlauslösungen zu erhalten. Nachteilig bei dieser Methode ist, daß - insbesondere im Versagensfall der untergeordneten Schalter - der Kurzschlußstrom mehrere Halbwellen lang fließen muß, um mit Sicherheit erkannt werden zu können. Diese Maßnahme ist notwendig, um betriebsmäßige Überströme sicher von Kurzschlüssen zu unterscheiden. Dadurch können bereits aber Schäden am Ort des Kurzschlusses entstehen und kann sich die Störung über weite Teile des Energieverteilungsnetzes ausbreiten.

Mit der US-PS 4 811 154 wurde weiterhin bereits die Kurzschlußfrüherkennung durch gleichzeitige Analyse der Stromanstiegsrate zusätzlich zur Stromamplitude vorgeschlagen. Aus etz, Bd. 112 (1991), S. 718-722 ist schließlich ein Verfahren zur frühzeitigen Kurzschlußerkennung mittels digitaler Algorithmen vorbekannt. Damit ist eine Kurzschlußfrüherkennung bereits im ansteigenden Teil einer Halbwelle bei noch vergleichsweise geringem Momentanstrom möglich. Das Versagen eines Leistungsschalters ist jedoch auch hier erst in Kombination mit dem Nachweis einer unzulänglich langen Lichtbogendauer im betroffenen Schalter nachweisbar. Speziell bei mehrpoligen Schaltgeräten müssen deshalb die Lichtbogendauer in allen Polen mit gemessen werden. Eine entsprechende Diagnose wie auch die Kurzschlußfrüherkennung selbst ist daher sehr aufwendig und kostenintensiv. Insbesondere können Spätversager erst bei deren Auftreten erkannt und deswegen zumindest nicht vorhergesagt werden.

Aus der EP 0 096 601 A1 ist eine Anordnung zur Netzüberwachung mit einer Vielzahl von Schaltern in gleicher Hierarchie-Ebene bekannt, denen ein übergeordneter Schalter zugeordnet ist, wobei in Abhängigkeit von an den einzelnen Schaltern erfasster Signale der übergeordnete Schalter aktiviert werden kann. Weiterhin ist aus der EP 0 116 509 ein Stromsensor bekannt, mit dem dynamisch Ströme erfasst werden können.

Ausgehend von obigem Stand der Technik ist es Aufgabe der Erfindung, ein Verfahren und eine zugehörige Anordnung vorzuschlagen, welche eine verbesserte Selektivität in der Netzüberwachung bei Schaltanlagen ermöglicht.

Die Aufgabe ist mit folgenden Merkmalen gelöst:
- Es werden elektrische Nachströme nach Stromnnull erfaßt,
- die elektrischen Nachströme werden mit einem vorgegebenen Grenzwert verglichen und
- bei Überschreiten des Grenzwertes wird ein Signal zur Auslösung eines in der Schaltanlage übergeordneten Leistungsschalters erzeugt.

Bei der zugehörigen Anordnung, bei der das Netz einer Schaltanlage wenigstens einen übergeordneten Leistungsschalter und mehrere untergeordnete Leistungsschalter aufweist, ist eine Einrichtung vorhanden, die die Nachströme der untergeordneten Leistungsschalter erfaßt, bewertet und in Abhängigkeit allein von den erfaßten Nachströmen gegebenenfalls den übergeordneten Leistungsschalter auslöst. Dafür besteht die Einrichtung aus Einheiten zur Zustandserkennung und Strommessung einschließlich der Nachstromerfassung der Leistungsschalter einerseits und aus einem Auslöser für den übergeordneten Leistungsschalter.

Die erfindungsgemäße Lösung beruht also auf der Messung der Nachströme über Strukturelemente der Leistungsschalter. Dies ist insbesondere bei Vakuumschaltern über die Dampfschirme möglich. Die Höhe der Nachströme ist ein Maß für die dielektrische Wiederverfestigung einer Schaltröhre nach erfolgreicher Abschaltung eines Kurzschlußstromes am Ende einer Stromhalbwelle. Mit umfangreichen Versuchsreihen konnte nachgewiesen werden, daß oberhalb einer experimentell bestätigten, scharf definierten Grenze des Nachstromes nach dem Stromnulldurchgang auch bei zunächst erfolgreicher Abschaltung mit hoher Wahrscheinlichkeit mit dem Versagen der betroffenen Schaltröhre gerechnet werden muß. Dagegen ist unterhalb dieser Grenze ein sicheres Trennverhalten gewährleistet. Die absolute Lage dieser Grenze ist bauartabhängig, liegt jedoch speziell bei Vakuumschaltröhren in einem für Messungen gut zugänglichen Bereich von etwa 5 bis 15 A.

Bei Anwendung der Erfindung für Vakuumschaltröhren wird insbesondere auch eine Voraussage über das Zeitverhalten bei Schaltröhren mit einseitig angebundenem Schirm, d.h. bei elektrischer Verbindung zwischen Dampfschirm und einer der beiden Elektroden, ermöglicht, auch wenn die Schaltröhre durch einen Spätversager erst nach einigen 100 ms versagt.

Weitere Einzelheiten und Vorteile der Erfindung ergeben sich aus der nachfolgenden Figurenbeschreibung von Ausführungsbeispielen anhand der Zeichnung. Es zeigen
- Figur 1: eine graphische Auftragung des maximalen Nachstromes speziell beim Öffnen von Vakuumschaltern aufgetragen über die Lichtbogendauer,
- Figur 2: eine schematische Darstellung eines Vakuumschalters, bei dem die Messungen gemäß Figur 1 durchgeführt wurden,
- Figur 3: eine Anordnung zur selektiven Netzüberwachung für einen speziell einpoligen Leistungsschalter und
- Figur 4: eine Abwandlung der Anordnung gemäß Figur 3 mit einem Bussystem.

Es wird ein Verfahren vorgeschlagen, bei dem im einzelnen speziell bei Vakuumschaltern der Strom nach dem ersten Stromnulldurchgang des öffnenden Schaltpoles gemessen und analysiert wird, um bei Überschreiten eines voreingestellten Schwellwertes ein Signal zur Auslösung des übergeordneten Leistungsschalters zu erzeugen. Somit kann der Teilbereich des Netzes mit dem versagenden Leistungsschalter sehr frühzeitig, im Falle von Spätversagern unter Umständen bereits noch vor dem tatsächlichen Versagen, vom Netz getrennt werden. Damit wird eine mit bisherigen Methoden nicht mögliche Sicherheit in Energieverteilungsnetzen erreicht. Insbesondere werden Schäden und Gefährdungen durch den im Bereich des Kurzschlusses auftretenden Lichtbogen stark verringert sowie Folgekosten und Emissionen, wie Schall- bzw. Lichtbogenprodukte, minimiert.

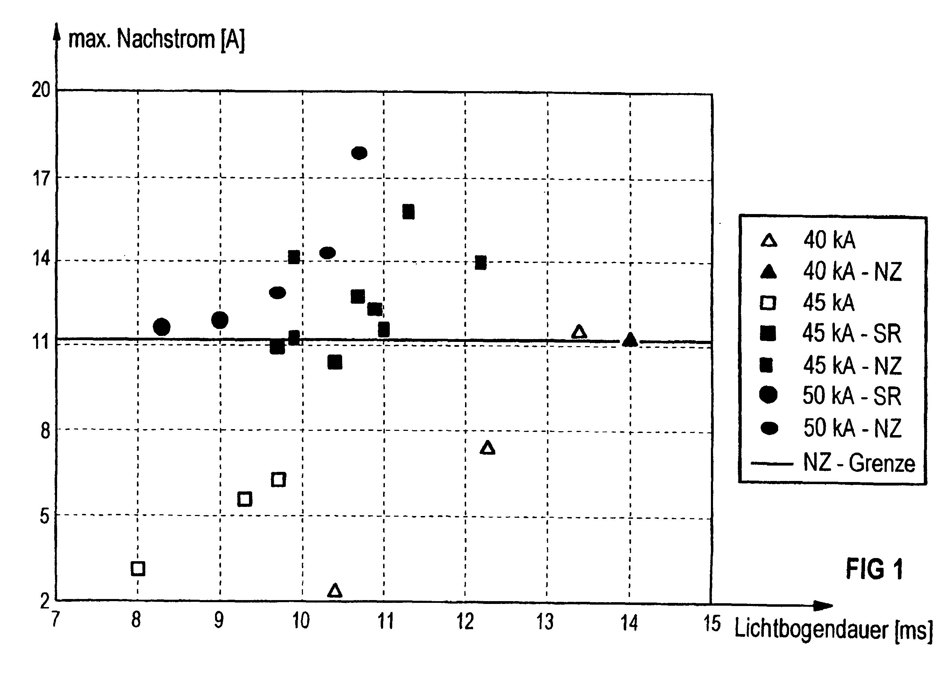

Figur 1 gibt die Ergebnisse umfangreicher Untersuchungen wieder. Aufgetragen sind experimentell gemessene Nachströme, die zu Neuzündungen bzw. Spätversagern als Funktion der Lichtbogendauer, was durch gefüllte Symbole gekennzeichnet ist, bzw. der Nachströme, die bei einwandfreiem Öffnen ohne Neuzündungen gemessen wurden, was durch offene Symbole gekennzeichnet ist. Die Größenordnung der Nachströme liegt im Bereich von etwa 5 bis 15 A, die Meßzeiten im Bereich von ms. Man erkennt aus der Darstellung gemäß Figur 1, daß eine Grenze vorhanden ist, unterhalb deren ein sicheres Trennverhalten gewährleistet ist, während oberhalb der Grenze auch bei zunächst erfolgter Abschaltung mit hoher Wahrscheinlichkeit mit dem Versagen der betroffenen Schaltröhre gerechnet werden muß.

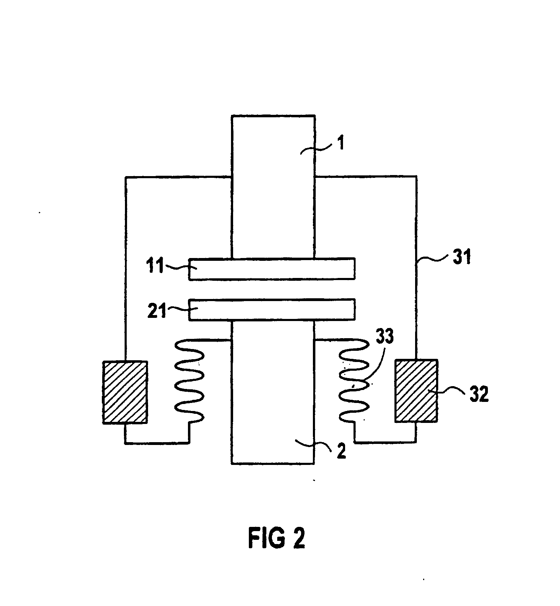

Die Messungen für die Darstellung gemäß Figur 1 wurden speziell an einer Vakuumschaltröhre vorgenommen, welche in Figur 2 schematisch wiedergegeben ist. Dabei bedeuten 1 der feststehende Stromzuführungsbolzen und 2 der bewegliche Stromzuführungsbolzen, welche an ihren Enden einen feststehenden Kontakt 11 einerseits und einen beweglichen Kontakt 21 andererseits tragen. Die Kontakte sind innerhalb der nach außen hermetisch abgeschlossenen Schaltröhre 30 angeordnet, die aus einem Dampfschirm 31, der gleichermaßen die Umhüllung bildet und mit dem feststehenden Stromzuführungsbolzen 1 verbunden ist, einem Isolator 32 und einem Federbalg 33 besteht. Solche Schaltröhren sind in der Praxis mit vielerlei Variationen bekannt.

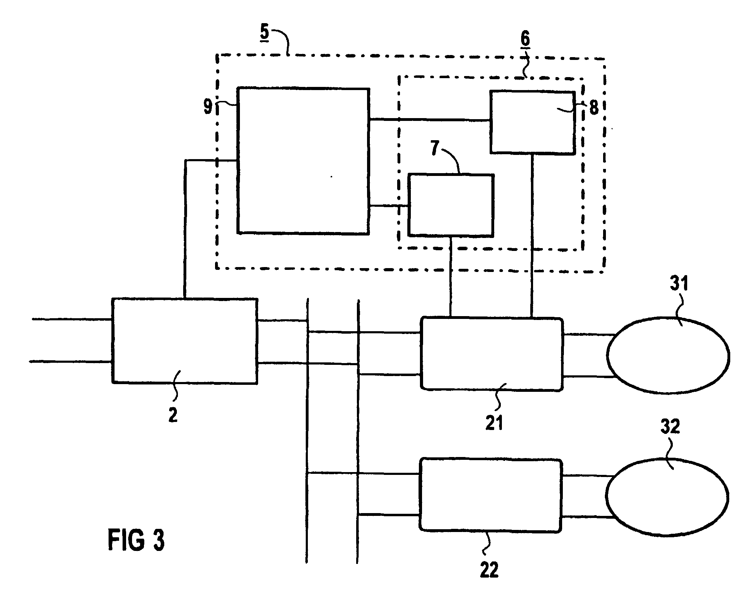

In der Figur 3 ist ein Leitungsnetz dargestellt, bei dem eine Reihe von Unterverteilungen oder Verbrauchern, welche jeweils durch einen eigenen, untergeordneten Leistungsschalter zu- bzw. weggeschaltet werden können, durch einen übergeordneten Leistungsschalter geschützt sind. Der übergeordnete Leistungsschalter ist mit 2 bezeichnet, während die beiden in Figur 3 dargestellten untergeordneten Leistungsschalter die Bezugszeichen 21 und 22 und die nachgeschalteten Verbraucher die Bezugszeichen 31 und 32 haben.

Bei einem Kurzschluß in einer der Unterverteilungen muß der zugehörige untergeordnete Leistungsschalter 21 oder 22 öffnen, um eine Störung der anderen Unterverteilungsnetze zu vermeiden. Versagt der entsprechende Leistungsschalter 21 oder 22, so muß der übergeordnete Leistungsschalter 2 die Gesamtmenge der ihm zugeordneten Unterverteilungen vom übrigen Netz trennen. Das dafür notwendige Auslösesignal erhält er von einer Einrichtung 5 zur selektiven Netzüberwachung, die nachfolgend im einzelnen beschrieben wird.

Gemäß Figur 3 umfaßt die Einrichtung 5 zur selektiven Netzüberwachung zwei wesentliche Teile: Einem diagnostischen Teil 6, bestehend aus einer Einheit 7 zur Schalterzustandserkennung und einer Einheit 8 zur Strommessung, sowie einem Auslöser 9 mit entsprechender Intelligenz zur Bewertung der aus dem diagnostischen Teil 6 erhaltenen Informationen.

In Figur 3 hat die Zustandserkennung die Aufgabe, den Fall geöffneter Schaltkontakte zu erkennen. Bei geöffneten Kontakten wird ein Signal an die Auslöseschaltung abgegeben. Die Strommessung verfolgt dabei im einzelnen zwei Ziele: Zum einen muß eine erfolgte Abschaltung diagnostiziert werden, was im einfachsten Fall durch das Erkennen eines Stromnulldurchganges erfolgen kann. Zum anderen muß erkannt werden, ob der nach erfolgter Abschaltung fließende Nachstrom in der entsprechenden Phase oberhalb der für die Schaltröhre kritischen Stromgrenze liegt, jenseits derer mit hoher Wahrscheinlichkeit mit einem Versagen gerechnet werden muß. Werden beide Voraussetzungen erfüllt, d.h. erfolgte eine Abschaltung und trat ein zu hoher Nachstrom auf, erhält der Auslöser 9 ein entsprechendes Signal.

Die Auslöseschaltung gibt genau dann ein Auslösesignal an den übergeordenten Leistungsschalter ab, wenn die beiden Eingangssignale von Zustandserkennung und Strommessung gleichzeitig anliegen. Dadurch werden die von dem übergeordneten Leistungsschalter versorgten Unterverteilungen vom Netz getrennt, so daß der Zweig mit dem versagenden Leistungsschalter stromlos wird und der Kurzschluß im Bereich der Unterverteilung trotz versagenden Leistungsschalters nicht weiter mit Energie versorgt wird.

In Figur 3 ist die selektive Netzüberwachung nur einmal als gemeinsame Einheit 5 dargestellt. Tatsächlich muß in jedem der beteiligten untergeordneten Leistungsschalter 21 und 22 eine eigene Überwachung vorhanden sein. Dabei kann es gemäß Figur 3 zweckmäßig sein, nur die beiden Funktionen 'Zustandserkennung' und 'Strommessung' jedem Schalter 21, 22, separat zuzuordnen und eine einzige Auslöseeinheit zu verwenden, welche dem zugehörigen übergeordneten Leistungsschalter 2 zugeordnet ist. Zur Kommunikation kann ein entsprechendes Bussystem vorhanden sein.

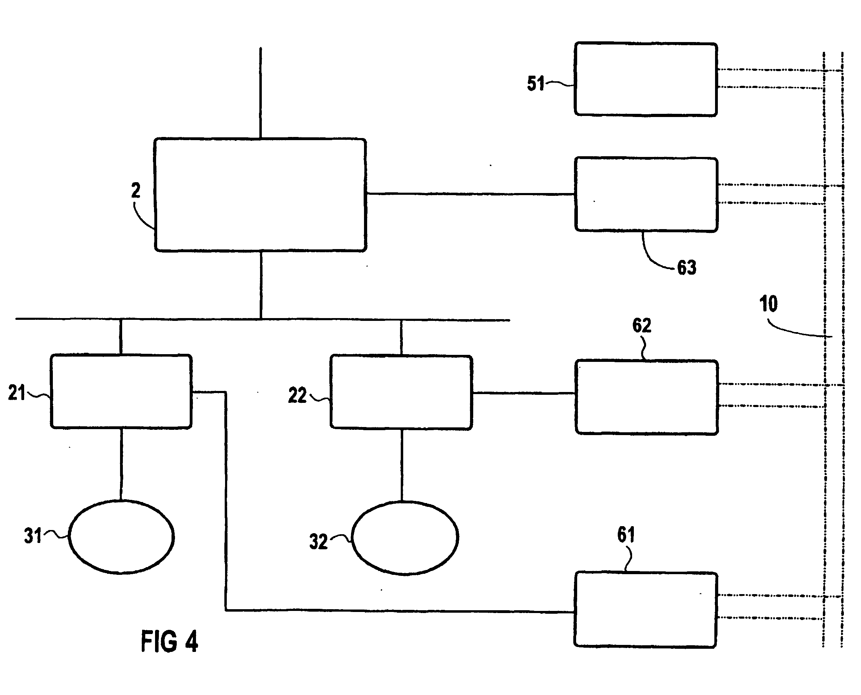

In Figur 4 ist die Anordnung der Figur 3 derart abgewandelt, daß dem System aus übergeordnetem Leistungsschalter 2 und untergeordneten Leistungsschaltern 21, 22 mit jeweils nachgeschalteten Verbrauchern 23, 24 jeweils Einheiten 61, 62 und 63 zur Strommessung, Zustandserkennung und Auslösung zugeordnet sind, die über ein Bussystem 10 mit einer Einheit 51 für die selektive Netzüberwachung gekoppelt sind. Damit ist eine umfassende Kommunikation gewährleistet.

Das beschriebene Verfahren und die zugehörige Anordnung wurde vorstehend speziell für einen Vakuumschalter mit einer einzigen Schaltröhre, d.h. für ein einphasiges Netz, dargestellt. Im Fall dreiphasiger Netze muß für jede Phase des untergeordneten Leistungsschalters eine separate Strommessung durchgeführt werden.

Abgesehen von Vakuumschaltern kann das Verfahren auch bei anderen Schaltprinzipien angewendet werden, sofern dort für den Strom ebenfalls eine vergleichbare scharf definierte Grenze, die einem bevorstehenden Versagen entspricht, existiert.

## Patentansprüche

1. Verfahren zur selektiven Netzüberwachung bei Schaltanlagen mit folgenden Merkmalen:
- Es werden elektrische Nachströme nach Stromnull erfaßt,
- die elektrischen Nachströme werden mit einem vorgegebenen Grenzwert verglichen und
- bei Überschreiten des Grenzwertes wird ein Signal zur Auslösung eines in der Schaltanlage übergeordneten Leistungsschalters erzeugt.

2. Verfahren nach Anspruch 1, **dadurch gekennzeichnet, daß** der Strom nach dem ersten Stromnulldurchgang des öffnenden Schaltpoles gemessen und analysiert wird.

3. Verfahren nach Anspruch 1, **dadurch gekennzeichnet, daß** der Grenzwert für die Signalerzeugung zur Auslösung des übergeordneten Leistungsschalters bauartabhängig gewählt wird.

4. Verfahren nach einem der Ansprüche 1 bis 3, wobei die Schaltanlage Vakuumschalter mit wenigstens einer Vakuumschaltröhre enthält, **dadurch gekennzeichnet, daß** die Nachströme über Strukturelemente der Schaltröhre, vorzugsweise dem Dampfschirm, gemessen werden.

5. Verfahren nach Anspruch 3 und Anspruch 4, **dadurch gekennzeichnet, daß** der Grenzwert zur Signalerzeugung zur Auslösung des übergeordneten Leistungsschalters bei Vakuumschaltröhren im Bereich zwischen 5 und 15 A liegt.

6. Anordnung zur selektiven Netzüberwachung bei Schaltanlagen mit Mitteln zur Durchführung des Verfahrens gemäß Anspruch 1 oder einem der Ansprüche 2 bis 5, wobei das Netz mit der Schaltanlage einen übergeordneten Leistungsschalter (2) und mehrere untergeordnete Leistungsschalter (21, 22) aufweist und wobei eine Einrichtung (5, 51) vorhanden ist, die Nachströme der untergeordneten Leistungsschalter (21, 22) erfaßt, bewertet und die in Abhängigkeit allein von den erfaßten Nachströmen ggf. den übergeordneten Leistungsschalter (2) auslöst.

7. Anordnung nach Anspruch 6, **dadurch gekennzeichnet, daß** der Einrichtung (5, 51) Diagnoseeinheiten (6, 61, 62, 63) zur Zustandserkennung einerseits und Messung der Nachströme an den untergeordneten Leistungsschaltern (2, 21, 22) andererseits zugeordnet sind.

8. Anordnung nach Anspruch 6, **dadurch gekennzeichnet, daß** wenigstens ein Auslöser (9) für den übergeordneten Leistungsschalter (2) vorhanden ist.

9. Anordnung nach Anspruch 7 und Anspruch 8, **dadurch gekennzeichnet, daß** jedem der untergeordneten Leistungsschalter (21, 22) der Schaltanlage eigene Diagnoseeinheiten (6, 61, 62) zur Zustandserkennung und zur Messung der Nachströme zugeordnet sind und daß eine einzige Einheit (9) zur Auslösung des übergeordneten Leistungsschalters (2) vorhanden ist.

10. Anordnung nach einem der Anspruch 6 bis 9, **dadurch gekennzeichnet, daß** ein System zur Datenübertragung, insbesondere ein Bussystem (10), vorhanden ist.

## Claims

1. Method for selective network monitoring for switchgear systems with the following characteristics:
- Electrical post-arc currents after zero current are recorded,
- the electrical zero currents are compared with a presepecified limit value and
- if they exceed the limit value a signal is generated to trigger the circuit breaker higher up in the switchgear system hierarchy.

2. Method in accordance with Claim 1, **characterized in that** the current after the first zero current crossing of the opening switching pole is measured and analyzed.

3. Method in accordance with Claim 1, **characterized in that** the limit value for signal generation to trigger the higher-ranking circuit breaker is selected according to type of construction.

4. Method in accordance with one of Claims 1 to 3, whereby the switchgear system contains vacuum switches with at least on vacuum switch tube, **characterized in that** the post-arc currents are measured using structure elements of the switching tubes, preferably the vapor shield.

5. Method in accordance with Claim 3 and Claim 4, **characterized in that** the limit value for signal generation to trigger the higher-ranking circuit breaker lies in the range between 5 and 15 A for vacuum switching tubes.

6. Arrangement for selective network monitoring for switchgear with means of executing the method in accordance with Claim 1 or one of the claims 2 to 5, w whereby the network with the switch gear systems features one higher-ranking circuit breaker (2) and a number of lower-ranking circuit breakers (21, 22) and whereby a device (5, 51) is present that records the post-arch currents of the subordinate circuit breakers (21, 22)evaluates them and which triggers the higher-ranking circuit breaker (2) solely depending on the recorded post-arc currents.

7. Arrangement in accordance with Claim 6, **characterized in that** diagnostic units (6, 61, 62, 63) to detect the status on the one hand and to measure the post-arc currents at the subordinate circuit breakers (2, 21, 22) on the other hand are assigned to the device (5, 51).

8. Arrangement in accordance with Claim 6, **characterized in that** at least one trigger (9) is present for the higher-ranking circuit breaker (2).

9. Arrangement in accordance with Claim 7 and Claim 8, **characterized in that** separate diagnosis units (6, 61, 62) for status detection and measuring the post-arc currents are assigned to each of the subordinate circuit breakers (21, 22) of the switchgear system and that a single unit (9) for triggering the higher-ranking circuit breaker (2) is present.

10. Arrangement in accordance with one of the Claims 6 to 9, **characterized in that** a system for data transmission, especially a bus system (10) is present.

## Revendications

1. Procédé pour la surveillance sélective de réseau dans des installations de distribution ayant les caractéristiques suivantes :
- on détecte des post-courants électriques après un zéro de courant,
- on compare les post-courants électriques à une valeur limite prédéterminée, et
- lors du dépassement de la valeur limite, on produit un signal pour le déclenchement d'un disjoncteur de puissance de rang supérieur dans l'installation de distribution.

2. Procédé selon la revendication 1, **caractérisé par le fait qu'**on mesure et analyse le courant après le premier passage à zéro du courant du pôle de commutation ouvrant.

3. Procédé selon la revendication 1, **caractérisé par le fait qu'**on choisit la valeur limite pour la production du signal destiné au déclenchement du disjoncteur de puissance supérieur en fonction du type de construction.

4. Procédé selon l'une des revendications 1 à 3, l'installation de distribution contenant des disjoncteurs à vide avec au moins un tube commutateur à vide, **caractérisé par le fait qu'**on mesure les post-courants au moyen d'éléments structurels du tube commutateur, de préférence l'écran à vapeur.

5. Procédé selon la revendication 3 et la revendication 4, **caractérisé par le fait que** la valeur limite pour la production du signal destiné au déclenchement du disjoncteur supérieur dans des tubes commutateurs à vide est comprise entre 5 et 15 A.

6. Dispositif pour la surveillance sélective de réseau dans des installations de commutation avec des moyens pour la mise en oeuvre du procédé selon la revendication 1 ou selon l'une des revendications 2 à 5, le réseau avec l'installation de distribution comportant un disjoncteur de puissance supérieur (2) et plusieurs disjoncteurs de puissance secondaires (21, 22) et un dispositif (5, 51) étant prévu, lequel détecte les post-courants des disjoncteurs de puissance secondaires (21, 22) et déclenche éventuellement le disjoncteur de puissance supérieur (2) en fonction seulement des post-courants détectés.

7. Dispositif selon la revendication 6, **caractérisé par le fait qu'**il est associé au dispositif (5, 51) des unités de diagnostic (6, 61, 62, 63) pour la détection d'état d'une part et pour la mesure des post-courants sur les disjoncteurs de puissance secondaires (2, 21, 22) d'autre part.

8. Dispositif selon la revendication 6, **caractérisé par le fait qu'**il est prévu au moins un déclencheur (9) pour le disjoncteur de puissance supérieur (2).

9. Dispositif selon la revendication 7 et la revendication 8, **caractérisé par le fait qu'**il est associé à chacun des disjoncteurs de puissance secondaires (21, 22) de l'installation de distribution des unités de diagnostic particulières (6, 61, 62) pour la détection d'état et pour la mesure des post-courants et qu'il est prévu une seule unité (9) pour le déclenchement du disjoncteur de puissance supérieur (2).

10. Dispositif selon l'une des revendications 6 à 9, **caractérisé par le fait qu'**un système, notamment un système de bus (10), est prévu pour la transmission de données.
